Europäisches Patentamt

European Patent Office

Office européen des brevets

(19)

(11) Numéro de publication: **0 270 387 B1**

## FASCICULE DE BREVET EUROPEEN

(12)

(45) Date de publication de fascicule du brevet:
29.05.91

(51) Int. Cl.⁵: **G01B 7/04,** F02P 7/06,
G01P 3/487, G01D 5/245

(21) Numéro de dépôt: 87402181.9

(22) Date de dépôt: 30.09.87

(54) Dispositif de détection de la position angulaire du vilebrequin d'un moteur à combustion interne.

(30) Priorité: 09.10.86 FR 8614070

(43) Date de publication de la demande:
08.06.88 Bulletin 88/23

(45) Mention de la délivrance du brevet:
29.05.91 Bulletin 91/22

(84) Etats contractants désignés:
DE GB IT

(56) Documents cités:
EP-A- 0 046 232
EP-A- 0 190 639
DE-A- 3 135 514
FR-A- 2 463 401
GB-A- 2 080 646

PATENT ABSTRACTS OF JAPAN, vol. 8, no.
60 (P-262)[1497], 22 mars 1984; & JP-A-58 210
568 (MITSUBISHI JUKOGYO K.K.) 07-12-1983

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Achard, Michel**
**18 place de la Liberté**
**F-92250 La Garenne-Colombes(FR)**

(74) Mandataire: **Durand, Yves Armand Louis et al**
**Cabinet Z. Weinstein 20, Avenue de Fried-**
**land**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention a pour objet un procédé de détection de la position angulaire du vilebrequin d'un moteur à combustion interne, servant par exemple à commander un ensemble d'injection et/ou un ensemble d'allumage.

Les dispositifs de détection actuellement connus sont du type constitués par des repères portés par un organe mobile dont la vitesse est liée à la vitesse de rotation du vilebrequin, lesdits repères étant détectés par un capteur placé au voisinage de cet organe mobile.

L'organe mobile peut être une roue dentée entraînée directement par le vilebrequin du moteur et comportant au moins une dent manquante ou différente des autres. Cette solution est coûteuse et, pour un moteur à quatre temps, elle ne permet pas de savoir si l'on est dans le premier ou le second tour d'un cycle puisqu'il y a deux tours de vilebrequin pour un cycle moteur.

L'organe tournant peut être encore une roue dentée intégrée au distributeur d'allumage. Cette solution est peu précise, du fait d'une part, des dispersions cumulées d'un nombre de pièces élevé entre le vilebrequin et le distributeur et, d'autre part, du calage de l'allumeur.

Selon la demande de brevet européen N° 0 190 639, l'organe mobile peut être aussi un tambour ou disque rotatif, comportant au moins deux pistes d'enregistrement, l'une servant à mesurer l'angle de rotation du vilebrequin d'un moteur, l'autre servant à détecter le cylindre. Le dispositif de détection décrit ici, est encore extérieur au dispositif moteur et est très complexe du fait de l'existence d'une piste d'enregistrement pour chaque type de mesure. De plus, la mesure de l'angle ne se fait pas simultanément à celle du cycle moteur.

La présente invention a pour but de pallier notamment les inconvénients ci-dessus, en proposant un procédé de détection particulièrement simple et peu coûteux permettant de connaître la position angulaire exacte du vilebrequin tout au long du cycle, soit deux tours de vilebrequin pour un moteur à combustion interne à quatre temps.

A cet effet, l'invention a pour objet un procédé de détection de la position angulaire du vilebrequin d'un moteur à combustion interne, essentiellement caractérisé en ce que l'organe mobile portant les repères est constitué par la courroie entraînant l'arbre à cames du moteur, cette courroie passant autour d'un pignon d'entraînement porté par le vilebrequin et possédant une longueur qui est un multiple entier du double du périmètre de ce pignon.

On précisera encore ici que les repères portés par la courroie d'entraînement sont constitués par des zones magnétisées alternativement N-S et S-N formées dans une bande contenant des particules magnétisables.

Suivant une autre caractéristique de l'invention, la courroie d'entraînement se décompose en plusieurs tronçons identiques de longueur L égale au double du périmètre du pignon d'entraînement porté par le vilebrequin.

Chaque tronçon précité comprend une succession de petites zones magnétisées N-S et S-N, auxquelles fait suite une zone magnétisée de largeur supérieure à une petite zone magnétisée.

Suivant une caractéristique avantageuse, la bande contenant les particules magnétisables est située du côté opposé aux crans de la courroie engrenant avec le pignon menant du vilebrequin et un pignon mené solidaire de l'arbre à cames.

Suivant un exemple de réalisation, les flancs de la courroie crantée précitée de même qu'une ou plusieurs dents des pignons du vilebrequin et de l'arbre à cames portent des repères de couleur.

Mais d'autres caractéristiques et avantages de l'invention apparaîtront mieux dans la description détaillée qui suit et se réfère aux dessins annexés, donnés uniquement à titre d'exemple, dans lesquels :

- la figure 1 est une vue schématique du dispositif de transmission entre le vilebrequin et l'arbre à cames d'un moteur à combustion interne ;
- la figure 2 est une vue en perspective d'un tronçon de la courroie représentée à la figure 1 ; et
- la figure 3 est une vue schématique du signal fourni par le capteur.

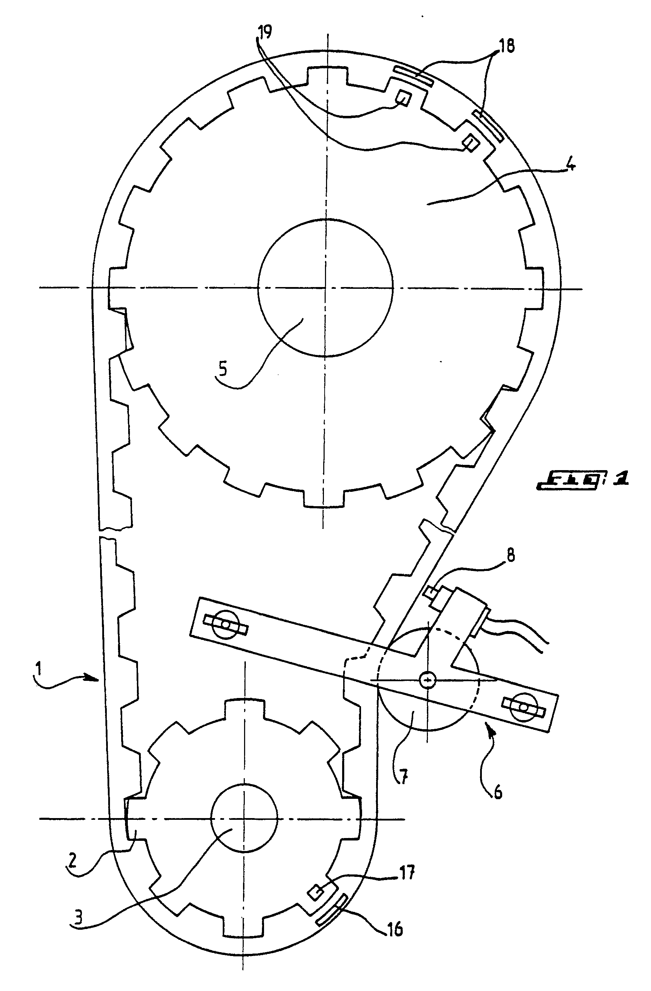

En se reportant à la figure 1, on voit une courroie crantée 1 reliant un pignon d'entraînement 2 solidaire d'un vilebrequin 3 à un pignon mené 4 solidaire d'un arbre à cames 5 du moteur à combustion interne.

Un capteur 8 susceptible de détecter des repères portés par la courroie crantée 1, est situé à proximité de ladite courroie 1.

Ce capteur est constitué, par exemple, par un bobinage disposé sur un noyau de fer doux.

Le capteur 8 est fixé, face à la courroie 1, de préférence sur un dispositif tendeur 6 de ladite courroie. Ce dispositif tendeur 6 est muni d'un galet 7 et assure de façon connue, une tension permanente de la courroie 1.

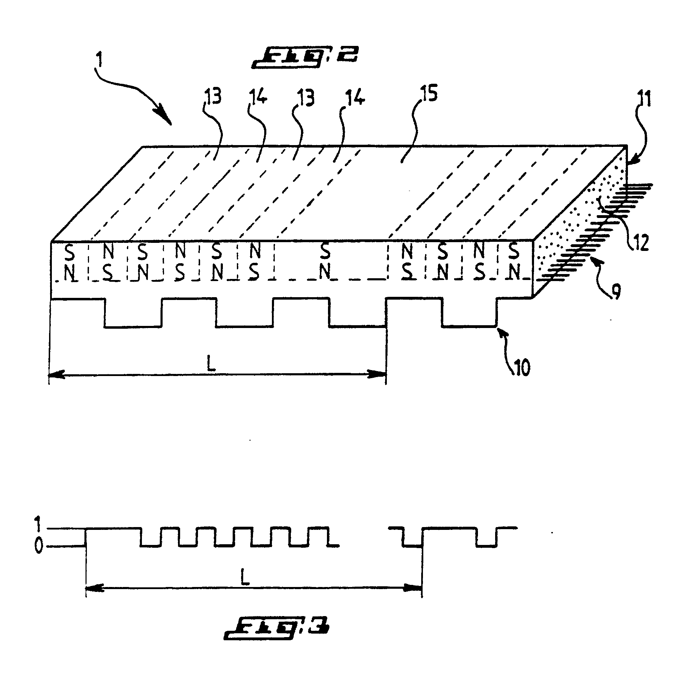

Comme on le voit sur la figure 2, la courroie souple 1, réalisée en matériau plastique ou élastomère, comporte, de façon classique, une armature 9 disposée en nappe, en dehors des crans 10. Selon l'invention, la partie 11 de la courroie 1 située, par rapport à la nappe 9, à l'opposé des crans 10, comporte une multitude de particules 12 en matière magnétisable, par exemple en oxyde de baryum, incorporées au moment du moulage de la courroie.

Ces particules sont aimantées, par défilement de la courroie, dans un champ magnétique, de manière à créer des zones 13, 14, alternativement N-S et S-N, dans le sens de l'épaisseur de la courroie. Ainsi, on a réalisé des repères dans la partie ou bande 11 de la courroie 1, à l'opposé des crans 10 de cette courroie.

La courroie se décompose en plusieurs tronçons identiques de longueur L, chaque tronçon comportant une succession de petites zones 13 et 14 de même largeur et une zone 15 de largeur supérieure. La longueur L est égale au double du périmètre du pignon d'entraînement 2 et la courroie 1 présente une longueur totale développée égale à un multiple entier de la longueur de base L.

On décrira maintenant le fonctionnement du dispositif qui vient d'être décrit en se reportant plus particulièrement à la figure 1.

Pour assurer le positionnement de la courroie 1, on fait coïncider d'une part un repère 16 par exemple, porté par le flanc de la courroie 1, avec un autre repère 17 porté par le flanc d'une dent du pignon d'entraînement 2 et, d'autre part, deux autres repères 18 sur le flanc de la courroie 1 avec deux repères 19 portés par le flanc de deux dents du pignon mené 4.

Le défilement de la courroie 1 devant le capteur 8 fait apparaître un signal dont l'allure générale est donnée par le schéma de la figure 3, la zone magnétisée 15 permettant de savoir très exactement, à chaque instant, à quel point du cycle moteur on se trouve.

On notera que la disposition décrite est particulièrement économique, compte tenu de la simplicité des moyens utilisés.

De plus, la courroie 1 étant située dans une zone où les températures maximales ne sont pas très élevées, il n'y a aucun risque de détérioration de la partie magnétisée. Enfin, le fait de monter le capteur 8 sur le dispositif tendeur 6 garantit la constance du jeu entre ce capteur et la courroie 1.

Bien entendu, l'invention n'est nullement limitée au mode de réalisation décrit et illustré qui n'a été donné qu'à titre d'exemple.

C'est ainsi que les repères portés par le flanc de la courroie 1 et des dents des pignons peuvent revêtir une forme quelconque.

**Revendications**

1. Procédé de détection de la position angulaire du vilebrequin d'un moteur à combustion interne consistant à détecter des repères portés par un organe mobile dont la vitesse est liée à la vitesse de rotation du vilebrequin (3), au moyen d'un capteur (8) placé au voisinage de cet organe mobile, caractérisé en ce que ledit organe mobile constitué par la courroie (1) entraînant l'arbre à cames (5) du moteur, par l'intermédiaire d'un pignon (4), et passant autour d'un pignon d'entraînement (2) porté par le vilebrequin (3), possède une longueur qui est un multiple entier du double du périmètre du pignon( 2).

2. Procédé selon la revendication 1, caractérisé en ce que les repères de ladite courroie d'entraînement (1) sont constitués par des zones magnétisées alternativement N-S et S-N (13, 14) et formées dans une bande (11) contenant des particules magnétisables (12).

3. Procédé selon la revendication 2, caractérisé en ce que ladite courroie (1), comprenant des crans (10) engrenant avec les pignons (2,4), se décompose en plusieurs tronçons identiques de longueur (L) égale au double du périmètre du pignon d'entraînement (2) porté par le vilebrequin (3).

4. Procédé selon la revendication 3, caractérisé en ce que chaque tronçon de courroie comprend une succession de petites zones magnétisées N-S et S-N (13, 14), auxquelles fait suite une zone magnétisée (15) de largeur supérieure à une petite zone magnétisée.

5. Procédé selon la revendication 3, caractérisé en ce que la bande (11) contenant les particules magnétisables (12) est située du côté opposé aux crans (10) de la courroie (1) engrenant avec le pignon d'entraînement (2) du vilebrequin et avec le pignon mené (4) solidaire de l'arbre à cames (5).

6. Procédé selon la revendication 5, caractérisé en ce que les flancs de la courroie crantée précitée (1) de même qu'une ou plusieurs dents des pignons (2,4) du vilebrequin (3) et de l'arbre à cames (5) portent des repères.

7. Procédé selon la revendication 6, caractérisé en ce que les flancs de la courroie crantée précitée (1) portent trois repères (16,18), tandis qu'un repère (17) est prévu sur une dent du pignon (2) du vilebrequin et deux repères (19) sont prévus sur deux dents du pignon (4) de l'arbre à cames (5).

8. Procédé selon l'une des revendications précédentes, caractérisé en ce que le capteur (8) associé à la courroie d'entraînement (1) est porté par un dispositif tendeur (6) de la courroie crantée et est constitué par un bobinage sur un noyau de fer doux.

## Claims

1. Method of detecting the angular position of the crankshaft of an internal combustion engine consisting in detecting reference marks carried by a movable member the speed of which is bound to the speed of rotation of the crankshaft (3) by means of a sensor (8) placed in the vicinity of this movable member, characterized in that the said movable member constituted by the belt (1) driving the camshaft (5) of the engine through the medium of a pinion (4) and passing about a drive pinion (2) carried by the cranskhaft (3) has a length which is a whole multiple of twice the perimeter of the pinion (2).

2. Method according to claim 1, characterized in that the reference marks of the said drive belt (1) are constituted by zones alternately magnetized as N-S and S-N (13, 14) and formed in a strip (11) containing magnetizable particles (12).

3. Method according to claim 2, characterized in that the said belt (1) comprising teeth (10) meshing with the pinions (2, 4) consists of several identical sections with a length (L) equal to twice the perimeter of the drive pinion (2) carried by the crankshaft (3).

4. Method according to claim 3, characterized in that each belt section comprises a sequence of small zones magnetized as N-S and S-N (13, 14) which are followed by a magnetized zone (15) with a width greater than a small magnetized zone.

5. Method according to claim 3, characterized in that the strip (11) containing the magnetizable particles (12) is located towards the side opposite to the teeth (10) of the belt (1) meshing with the drive pinion (2) of the crankshaft and with the driven pinion (4) made fast to the camshaft (5).

6. Method according to claim 5, characterized in that the flanks of the aforesaid toothed belt (1) as well as one ou several teeth of the pinions (2, 4) of the crankshaft (3) and of the camshaft (5) carry reference marks.

7. Method according to claim 6, characterized in that the flanks of the aforesaid toothed belt (1) carry three reference marks (16, 18) whereas one reference mark (17) is provided on one tooth of the pinion (2) of the crankshaft and two reference marks (19) are provided on two teeth of the pinion (4) of the camshaft (5).

8. Method according to one of the foregoing claims, characterized in that the sensor (8) associated with the drive belt (1) is carried by a device (6) for stretching the toothed belt and is constituted by a winding on a soft iron core.

## Ansprüche

1. Verfahren zur Feststellung der Winkellage der Kurbelwelle eines Verbrennungsmotors, das darin besteht, Markierungen, die von einem beweglichen Glied, dessen Geschwindigkeit an die Drehzahl der Kurbelwelle (3) gebunden ist, mittels eines in der Nachbarschaft dieses beweglichen Gliedes liegenden Messwertgebers (8) zu ermitteln, dadurch gekennzeichnet, dass das durch den die Nockenwelle (5) des Motors über ein Ritzel (4) antreibenden und um ein von der Kurbelwelle (3) getragenes Antriebszahnrad (2) geführten Riemen (1) gebildete besagte bewegliche Glied eine Länge besitzt, die ein ganzzahliges Vielfaches des doppelten Wertes des Perimeters des Zahnrads (2) ist.

2. Verfahren nach Anspruch 1, dadurch gekennzeichnet, dass die Markierungen des besagten Antriebsriemens (1) durch wechselweise als N-s und S-N magnetisierte und in einem magnetisierbare Teilchen (12) enthaltenden Band (11) gebildete Bereiche (13,14) gebildet werden.

3. Verfahren nach Anspruch 2, dadurch gekennzeichnet, dass der besagte mit den Zahnrädern (2,4) kämmenden Rasten (10) aufweisende Riemen sich in mehrere gleichartige Abschnitte mit einer dem Doppelwert des Perimeters des von der Kurbelwelle (3) getragenen Antriebszahnrads (2) gleichen Länge (L) unterteilt.

4. Verfahren nach Anspruch 3, dadurch gekennzeichnet, dass jeder Riemenabschnitt eine Reihenfolge von kleinen als N-S und S-N magnetisierten Bereichen (13,14) umfasst, auf welche ein magnetisierter Bereich (15) mit einer grösseren Breite als ein kleiner magnetisierter Bereich folgt.

5. Verfahren nach Anspruch 3, dadurch gekennzeichnet, dass das die magnetisierbaren Teilchen (12) enthaltende Band (11) auf der den mit dem Antriebszahnrad (2) der Kurbelwelle und mit dem mit der Nockenwelle (5) fest verbundenen Abtriebsritzel (4) kämmenden Rasten (10) des Riemens (1) abgewandten Seite liegt.

6. Verfahren nach Anspruch 5, dadurch gekennzeichnet, dass die Flanken des vorgenannten Zahnriemens (1) sowie ein oder mehrere Zähne der Zannräder (2,4) der Kurbelwelle (3) und der Nockenwelle (5) Markierungen tragen.

7. Verfahren nach Anspruch 6, dadurch gekennzeichnet, dass die Flanken des vorgenannten Zahnriemens (1) drei Markierungen (16,18) tragen, während eine Markierung (17) an einem Zahn des Zahnrads (2) der Kurbelwelle und zwei Markierungen (19) an zwei Zähnen des Ritzels (4) der Nockenwelle (5) vorgesehen ist bzw. sind.

8. Verfahren nach einem der vorangehenden Ansprüche, dadurch gekennzeichnet, dass der dem Antriebsriemen (1) zugeordnete Messwertgeber (8) von einer Vorrichtung (6) zum Spannen des Zahnriemens getragen und durch eine Wicklung auf einem Kern aus Weicheisen gebildet wird.

FIG. 1

## Fig. 2

S N S N S N S N N S N S N

L

## Fig. 3

1
0

L